# EUROPEAN PATENT APPLICATION

(11) **EP 2 384 024 A2**
(43) Date of publication of application: **02.11.2011**
(21) Application number: 10191649.2
(22) Date of filing: 18.11.2010
(51) Int. Cl.: H04R 3/00

(54) **Handset Leak-Tolerant Receiver**

(30) Priority: 30.04.2010 US 329973 P
(71) Applicant: Research In Motion Limited, Waterloo, ON N2L 3W8 (CA)
(72) Inventor: Moquin, Philippe Gilbert Jacques Joseph, Kanata Ontario K2K 3K1 (CA); Van Schyndel, Andre John, Kanata Ontario K2K 3K1 (CA)
(74) Representative: Patel, Binesh

(57) **Abstract**

To provide leak tolerance an acoustic system for an acoustic receiver comprises a loudspeaker, a front cavity, a rear cavity and an acoustic connection. The loudspeaker has a front area and a rear area opposite the front area the front area having an openingthrough which sound is output. The front cavity is in proximity to the front area of the loudspeaker, the openingoutputting into the front cavity, and the front cavity having a port to the exterior of the acoustic receiver. The rear cavity is in proximity to the rear area of the loudspeaker. The acoustic connection is between the front cavity and the rear cavity. In some embodiments, the rear cavity comprises an acoustic leak to the exterior of the rear cavity.

## Description

The present disclosure relates generally to an acoustic system for an acoustic receiver and a method of modifying an acoustic system for an acoustic receiver.

In traditional telephone sets a user easily sealed the receiver to the ear, as the size of the area of exterior of the speaker portion was mandated (e.g. ITU-T Recommendation P.35, Handset Telephones, 1988) to be large. With deregulation and the advent of mobile telephony, the size of handsets significantly diminished making a positive seal to the ear less likely. The audio performance of the receiver is affected depending on if the user seals the receiver or speaker portion of the telephone to their ear or allows an acoustic leak. If an acoustic leak is allowed, the user in the latter case experiences a significant loss of low frequency response.

This prompted the design of "leak-tolerant" receivers or receiver structures. "Leak tolerance" has been defined as the difference in frequency response expressed in dB of a device sealed to an ITU P.57 Type 3.2 "low-leak" and to Type 3.2 "high-leak" artificial ear (Recommendation ITU-T P.57 Artificial Ears, 29 April, 2009).

Leak tolerant receivers vary from classic variations on a bass-reflex design (e.g. US Patent No. 7,139,394) to a design that uses several leaks, such as in the disclosure of PCT patent application WO 2000/21330.

An example of bass-reflex design is found at Figure 8.16 of Beranek's standard text book "Acoustics" which was published in 1954. (Leo L. Beranek, Acoustics - 1993 revision of 1954 test, Acoustical Society of America, 1996) The benefits of this design are increased low frequency response. A bass-reflex design requires that the amount of rear cavity be quite significant. At high sound pressure levels, there can be significant air movement in the tuning port that will create distortion. The size requirement for the rear cavity and the distortion make the use of this idea rather unpopular in cellular telephones (see Salvatti, A., Devantier, A., & Button, D.J. (2002). Maximizing performance from loudspeaker ports. Journal of the Audio Engineering Society, 50 (1/2), 19-45.)

In solutions that use acoustic leaks, there is typically at least one secondary port to the exterior of the handset that is positioned in such a way that it remains open when the handset is pressed against the user's ear. The acoustic impedance seen by the receiver remains fairly constant thus the frequency response at the user's ear remains reasonably constant whether the ear seals completely or not. This secondary port or opening also permits ambient noise to be coupled to the user's ear. In a noisy environment, a user typically presses the handset to their ear to improve the seal. However, in this situation, the noise is still allowed to enter the ear and in some cases, creates a "colouring" of the noise due to the frequency response of the secondary port back to the ear. In some implementations, the colouring of the noise results in an amplification of the noise.

In one aspect, there is provided an acoustic system for an acoustic receiver, the system comprising: a loudspeaker, with a front area and a rear area opposite the front area the front area having an opening through which sound is output; a front cavity in proximity to the front area of the loudspeaker, the opening outputting into the front cavity, and the front cavity having a port to the exterior of the acoustic system; a rear cavity in proximity to the rear area of the loudspeaker; and an acoustic connection between the front cavity and the rear cavity.

In an embodiment, the rear cavity comprises an acoustic leak to the exterior of the rear cavity.

In an embodiment, the acoustic connection is one or more holes in a barrier separating the front cavity from the rear cavity.

In an embodiment, the acoustic connection is an opening that is approximately 1.75 mm wide by 1.0 mm long.

In an embodiment, the acoustic leak to the exterior of the rear cavity is provided at a seam in a casing of the acoustic receiver.

In an embodiment, the acoustic connection is sized to provide substantially consistent low frequency response at the port to the exterior in both a sealed and unsealed ear position.

In an embodiment, the acoustic leak to the exterior of the rear cavity is sized to provide substantially consistent low frequency response at the port to the exterior in both a sealed and unsealed ear position.

In an embodiment, the acoustic connection has relatively high acoustic impedance in comparison to an acoustic impedance of the port to the exterior.

In an embodiment, the acoustic leak to the exterior of the rear cavity has relatively high acoustic impedance in comparison to acoustic impedance of the port to the exterior.

In an embodiment, the acoustic connection comprises tube connecting the front cavity to the rear cavity.

In an embodiment, the acoustic system further comprises an acoustical resistive material covering at least a portion of the acoustic connection.

In an embodiment, the acoustic leak comprises one or more holes in a housing defining the rear cavity.

In an embodiment, the acoustic connection is smaller than the acoustic leak.

In an embodiment, the acoustic connection is approximately 0.25 the size of the acoustic connection.

In another aspect, there is provided a mobile communications device comprising the acoustic system of any of the embodiments described herein.

In another aspect, there is provide a method of modifying an acoustic system for use in a acoustic receiver having a loudspeaker, a front cavity and a rear cavity, the method comprising: creating an acoustic connection between the front cavity and the rear cavity.

In an embodiment, the method further comprises creating an acoustic leak from an interior of the rear cavity to an exterior of the rear cavity.

In an embodiment, creating the acoustic connection comprises creating one or more holes in a barrier separating the front cavity from the rear cavity.

In an embodiment, creating the acoustic leak comprises creating one or more holes in the rear cavity, the one or more holes extending from the interior of the rear cavity to the exterior of the rear cavity.
Figure 1A is a schematic diagram of an acoustic system for an acoustic receiver;
Figure 1B is a circuit representation of the acoustic system depicted in Figure 1A;
Figure 1C is a circuit representation of the acoustic system depicted in Figure 1A with ambient noise;
Figure 2 is a block diagram illustrating a mobile electronic device in accordance with one example embodiment of the present disclosure;
Figure 3A is a schematic diagram of an acoustic system of an acoustic receiver in accordance with one example embodiment of the present disclosure;
Figure 3B is a circuit representation of the acoustic system depicted in Figure 3A;
Figure 4A is a schematic diagram of an acoustic system of an acoustic receiver in accordance with one example embodiment of the present disclosure;
Figure 4B is a circuit representation of the acoustic system depicted in Figure 4A;
Figure 4C is a circuit representation of the acoustic system depicted in Figure 4A with ambient noise;
Figure 5 is a perspective view of a front cavity of an acoustic system in accordance with one example embodiment of the present disclosure;
Figure 6 is a graph depicting the leak tolerance of an acoustic system in accordance with one example embodiment of the present disclosure; and
Figure 7 is a graph depicting ambient noise attenuation of an acoustic system in accordance with one example embodiment of the present disclosure.

Like reference numerals are used in the drawings to denote like elements and features.

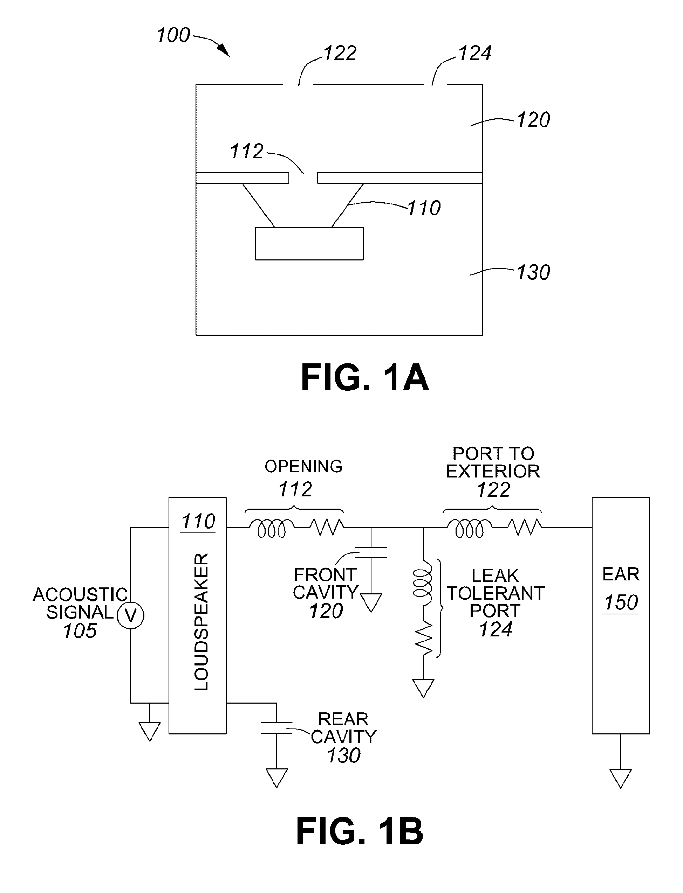

Users of mobile telephones do not always achieve a seal between their ears and the acoustic receiver of the mobile telephones. When a seal is not achieved, a low impedance acoustic leak occurs which results in degraded acoustic quality at low frequencies. Acoustic systems have been developed to provide leak tolerance for acoustic receivers. Two such systems are bass-reflex design and an acoustic leak to the exterior of the phone from a front cavity of the acoustic receiver. An example of the latter system will now be discussed with reference to Figures 1A and 1B. An acoustic system 100 comprises a loudspeaker 110, a front cavity 120 and a rear cavity 130. The front cavity 120 and the rear cavity 130 abut each other. The loudspeaker 110 located in the rear cavity 130 and has an opening 112 through which sound is output into the front cavity. The front cavity 120 has a port to the exterior 124 through which sound is output. In use, this port 122 would be against the user's ear. The front cavity 120 also has a leak tolerant port 124 which allows a leak to the exterior when the user seals the receiver to the user's ear in order to maintain constant impedance in the front cavity regardless of whether the phone is in a sealed or unsealed position. The rear cavity 130 has no openings.

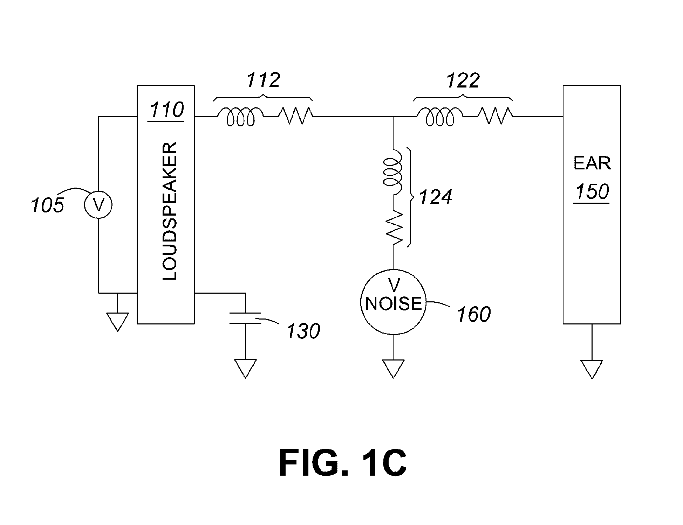

The acoustic system 100 can be represented as a circuit, such as that depicted in Figure 1B. The circuit in Figure 1B is not presented here as an actual physical circuit, but rather as an analog circuit that models the behaviour of the acoustic system 100. An electric signal 105 is a source input into the loudspeaker 110. The opening 112 and the port 122 to the exterior are represented as complex impedances in series to an ear 150. The front cavity 120 and the rear cavity 130 are represented as capacitors to ground. The leak tolerant port 124 is represented as a complex impedance to ground. The acoustic impedance of this leak may be chosen to be on the order of that of an ITU p.57 type 3.2 high leak artificial ear. A non-limiting example of the acoustic impedance of the leak tolerant port 124 is 115 dB Pa*s/m³ at 300 Hz. Referring to Figure 1C (which models the acoustic system 100 with ambient noise 160), the effect of ambient noise 160 on the acoustic system 100 can be seen. Figure 1C is basically the same as Figure 1B with one exception being that the ambient noise 160 is shown as a source between ground and the leak tolerant port 124. This ambient noise 160 can enter the front cavity 120 and interfere with the output of the loudspeaker 110.

By making changes to the system depicted in simplified fashion in Figure 1A, a different system may be realized. In an example embodiment in accordance with the present disclosure, an acoustic connection is provided between a front cavity and a rear cavity of an acoustic system. Non-limiting examples of the acoustic connection include: a small hole in a barrier separating the front cavity and the rear cavity; one or more holes in such a barrier; and a tube connecting the front cavity to the rear cavity. While this configuration uses more power than an acoustic leak from the front cavity to the exterior of the device, it permits pressure in the front cavity to be stabilized without interference from ambient noise. In some embodiments, a small acoustic leak from the rear cavity to the exterior of the rear cavity is also provided for additional pressure stabilization effect and low frequency response compensation. In an exemplary embodiment, a controlled acoustic port connects a sealed rear cavity of the receiver to the front volume. An example of controlling an acoustic port is a port for which the cross-sectional size and length can be varied to obtain various frequency dependent complex impedances. While this "short circuits" the driver (with some loss of efficiency) the system becomes less susceptible to change in the external loading. This provides the desired leak tolerance. As there are no connections to the exterior except through the earpiece, exterior noise is substantially blocked out from a sealed ear to the device. In testing, there are usually built-in leaks to the ITU p.57 type 3.2 artificial ear.

In another exemplary receiver, in addition to the above, a controlled acoustic leak of the rear cavity is added. This acoustic leak enhances the low frequency response and also improves the leak tolerant behaviour of the receiver by reducing the pressure in the rear cavity. A further benefit of this pressure reduction is that it prevents non-linear acoustic effects known to occur in small acoustic ports such as that connecting the rear cavity to the front cavity of the receiver. It is also designed so that ambient noise, which now can enter the system, is controlled by providing significant acoustical resistance and does not propagate efficiently to the user's ear. Thus, in accordance with one aspect, there is provided an acoustic system for an acoustic receiver, the system comprising: a loudspeaker, with a front area and a rear area opposite the front area the front area having an opening through which sound is output; a front cavity in proximity to the front area of the loudspeaker, the opening outputting into the front cavity, and the front cavity having a port to the exterior of the acoustic receiver; a rear cavity in proximity to the rear area of the loudspeaker; and an acoustic connection between the front cavity and the rear cavity.

In accordance with another aspect, there is provided a method of modifying an acoustic system for use in an acoustic receiver having a loudspeaker, a front cavity and a rear cavity, the method comprising: creating an acoustic connection between the front cavity and the rear cavity.

Embodiments of the present application are not limited to any particular operating system, mobile electronic device architecture, server architecture, or computer programming language. It is to be understood that alternate embodiments are feasible.

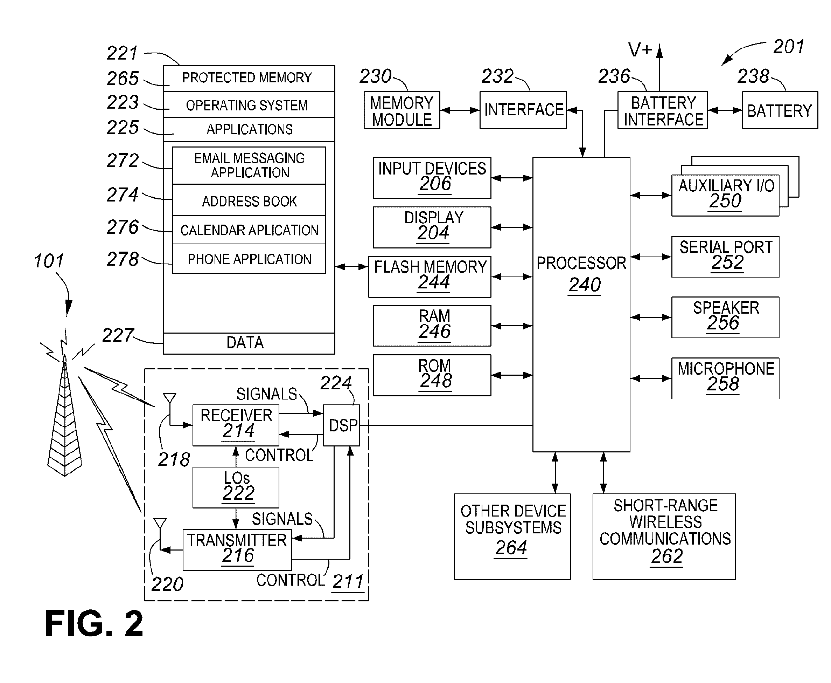

Reference is now made to Figure 2 which illustrates an exemplary embodiment of the mobile electronic device 201 in which example embodiments described in the present disclosure can be applied. The mobile electronic device 201 is a two-way communication device having data and voice communication capabilities, and the capability to communicate with other computer systems, for example, via the Internet. Depending on the functionality provided by the mobile electronic device 201, in various embodiments the device 201 may be a multiple-mode communication device configured for both data and voice communication, a smartphone, a mobile telephone or a PDA (personal digital assistant) enabled for wireless communication, or a computer system with a wireless modem.

The mobile electronic device 201 includes a rigid case (not shown) housing the components of the device 201. The internal components of the device 201 are constructed on a printed circuit board (PCB). The mobile electronic device 201 includes a controller comprising at least one processor 240 (such as a microprocessor) which controls the overall operation of the device 201. The processor 240 interacts with device subsystems such as a wireless communication subsystem 211 (sometimes referred to as a radio layer) for exchanging radio frequency signals with the wireless network 101 to perform communication functions. The processor 240 interacts with additional device subsystems including a display screen 204 such as a liquid crystal display (LCD) screen, input devices 206 such as a keyboard and control buttons, flash memory 244, random access memory (RAM) 246, read only memory (ROM) 248, auxiliary input/output (I/O) subsystems 250, data port 252 such as serial data port, such as a Universal Serial Bus (USB) data port, speaker 256, microphone 258, short-range communication subsystem 262, and other device subsystems generally designated as 264. The speaker 256 is a non-limiting example of the acoustic systems described herein. Some of the subsystems shown in Figure 2 perform communication-related functions, whereas other subsystems may provide "resident" or on-device functions.

The device 201 may comprise a touchscreen display in some embodiments. The touchscreen display may be constructed using a touch-sensitive input surface connected to an electronic controller and which overlays the display screen 204. The touch-sensitive overlay and the electronic controller provide a touch-sensitive input device and the processor 240 interacts with the touch-sensitive overlay via the electronic controller.

The communication subsystem 211 includes a receiver 214, a transmitter 216, and associated components, such as one or more antenna elements 218 and 220, local oscillators (LOs) 222, and a processing module, such as a digital signal processor (DSP) 224. The antenna elements 218 and 220 may be embedded or internal to the mobile electronic device 201 and a single antenna may be shared by both receiver and transmitter, as is known in the art. As will be apparent to those skilled in the field of communication, the particular design of the wireless communication subsystem 211 depends on the wireless network 101 in which mobile electronic device 201 is intended to operate.

The mobile electronic device 201 may communicate with any one of a plurality of fixed transceiver base stations 108 of the wireless network 101 within its geographic coverage area. The mobile electronic device 201 may send and receive communication signals over the wireless network 101 after the required network registration or activation procedures have been completed. Signals received by the antenna 218 through the wireless network 101 are input to the receiver 214, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 224. In a similar manner, signals to be transmitted are processed, including modulation and encoding, for example, by the DSP 224. These DSP-processed signals are output to the transmitter 216 for digital-to-analog (D/A) conversion, frequency up conversion, filtering, amplification, and transmission to the wireless network 101 via the antenna 220. The DSP 224 not only processes communication signals, but may also provide for receiver and transmitter control. For example, the gains applied to communication signals in the receiver 214 and the transmitter 216 may be adaptively controlled through automatic gain control algorithms implemented in the DSP 224.

The processor 240 operates under stored program control and executes software modules 221 stored in memory such as persistent memory, for example, in the flash memory 244. As illustrated in FIG. 1, the software modules 221 comprise operating system software 223, software applications 225 comprising an email messaging application 272 (also referred to as an email client 272), a personal address book 274, a calendar application 276, and a phone application.

The software applications 225 also may include a range of applications, including, for example, a notepad application, Internet browser application, voice communication (i.e. telephony) application, mapping application, or a media player application, or any combination thereof. Each of the software applications 225 may include layout information defining the placement of particular fields and graphic elements (e.g. text fields, input fields, icons, etc.) in the user interface (i.e. the display screen 204) according to the application.

Those skilled in the art will appreciate that the software modules 221 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely one example, and those skilled in the art will appreciate that a different assignment of functions to types of memory could also be used.

In some embodiments, the auxiliary I/O subsystems 250 may comprise an external communication link or interface, for example, an Ethernet connection. The mobile electronic device 201 may comprise other wireless communication interfaces for communicating with other types of wireless networks, for example, a wireless network such as an orthogonal frequency division multiplexed (OFDM) network or a GPS (Global Positioning System) subsystem comprising a GPS receiver or transceiver for communicating with a GPS satellite network (not shown). The auxiliary I/O subsystems 250 may comprise a pointing or navigational input device such as a clickable trackball or optical trackpad or scroll wheel or thumbwheel, or a vibrator for providing vibratory notifications in response to various events on the device 201 such as receipt of an electronic message or incoming phone call, or for other purposes such as haptic feedback (touch feedback).

In some embodiments, the mobile electronic device 201 also includes a removable memory card or module 230 (typically comprising flash memory) and a memory card interface 232. Network access is typically associated with a subscriber or user of the mobile electronic device 201 via the memory card 230, which may be a Subscriber Identity Module (SIM) card for use in a GSM network or other type of memory card for use in the relevant wireless network type. The memory card 230 is inserted in or connected to the memory card interface 232 of the mobile electronic device 201 in order to operate in conjunction with the wireless network 101.

The mobile electronic device 201 also stores other data 227 in an erasable persistent memory, which in one example embodiment is the flash memory 244. In various embodiments, the data 227 includes service data comprising information required by the mobile electronic device 201 to establish and maintain communication with the wireless network 101. The data 227 may also include user application data such as email messages, address book and contact information, calendar and schedule information, notepad documents, image files, and other commonly stored user information stored on the mobile electronic device 201 by its user, and other data. The data 227 stored in the persistent memory (e.g. flash memory 244) of the mobile electronic device 201 may be organized, at least partially, into a number of databases each containing data items of the same data type or associated with the same application. For example, email messages, contact records, and task items may be stored in individual databases within the device memory.

The mobile electronic device 201 also includes a battery 238 as a power source, which is typically one or more rechargeable batteries that may be charged, for example, through charging circuitry coupled to a battery interface such as the serial data port 252. The battery 238 provides electrical power to at least some of the electrical circuitry in the mobile electronic device 201, and the battery interface 236 provides a mechanical and electrical connection for the battery 238. The battery interface 236 is coupled to a regulator (not shown) which provides power V+ to the circuitry of the mobile electronic device 201.

The short-range communication subsystem 262 is an additional optional component which provides for communication between the mobile electronic device 201 and different systems or devices, which need not necessarily be similar devices. For example, the subsystem 262 may include an infrared device and associated circuits and components, or a wireless bus protocol compliant communication mechanism such as a Bluetooth® communication module to provide for communication with similarly-enabled systems and devices.

A predetermined set of applications that control basic device operations, including data and voice communication applications will normally be installed on the mobile electronic device 201 during or after manufacture. Additional applications and/or upgrades to the operating system 221 or software applications 225 may also be loaded onto the mobile electronic device 201 through the wireless network 101, the auxiliary I/O subsystem 250, the serial port 252, the short-range communication subsystem 262, or other suitable subsystem 264. The downloaded programs or code modules may be permanently installed, for example, written into the program memory (i.e. the flash memory 244), or written into and executed from the RAM 246 for execution by the processor 240 at runtime. Such flexibility in application installation increases the functionality of the mobile electronic device 201 and may provide enhanced on-device functions, communication-related functions, or both. For example, secure communication applications may enable electronic commerce functions and other such financial transactions to be performed using the mobile electronic device 201.

The mobile electronic device 201 may provide two principal modes of communication: a data communication mode and a voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by the email messaging application and output to the display 204. A user of the mobile electronic device 201 may also compose data items, such as email messages, for example, using the input devices in conjunction with the display screen 204. These composed items may be transmitted through the communication subsystem 211 over the wireless network 101.

In the voice communication mode, the mobile electronic device 201 provides telephony functions and operates as a typical cellular phone. The overall operation is similar, except that the received signals are output to the speaker 256 and signals for transmission are generated by a transducer such as the microphone 258. The telephony functions are provided by a combination of software/firmware (i.e., the phone application 278) and hardware (i.e., the microphone 258, the speaker 256 and input devices). Alternative voice or audio I/O subsystems, such as a voice message recording subsystem, may also be implemented on the mobile electronic device 201. Although voice or audio signal output is typically accomplished primarily through the speaker 256, the display screen 204 may also be used to provide an indication of the identity of a calling party, duration of a voice call, or other voice call related information.

The phone application 278 can be split into multiple applications or sub-modules, for example one or more user phone modules and a call control module. The user phone modules provide a variety of telephony features through a user interface, while the call control module provides access to common telephony functions desired by the user phone modules, such that telephony requests from phone modules can be coordinated and so that the user phone modules do not need to each provide instructions understood by the wireless communications subsystem 211. The call control function typically makes telephony features available to user phone modules through an application programming interface (API). It is to be recognized that all or part of the phone application 278 features or functions could be provided through the operating system or otherwise distributed in the device 201, while continuing to fall within the term phone application 278.

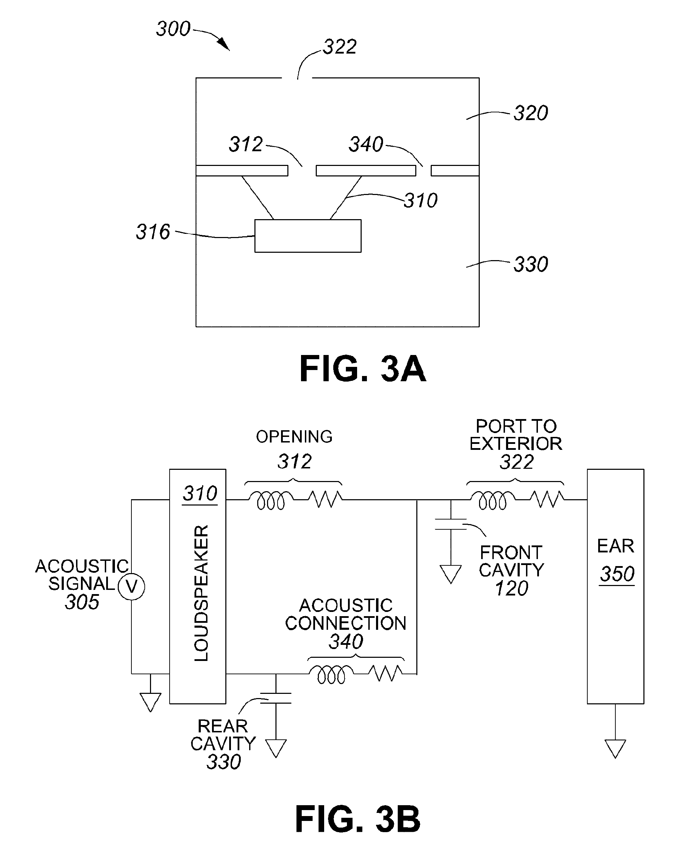

Referring now to Figure 3A, an acoustic system 300 for an acoustic receiver in accordance with an example embodiment will be described. The system 300 comprises a loudspeaker 310, a front cavity 320, a rear cavity 330 and an acoustic connection 340. The loudspeaker 310 has a front area 314 and a rear area 316 opposite the front area. The front area 314 has an opening 312 through which sound from the loud speaker 310 is output into the front cavity 320. The opening 312 is the part of the loudspeaker through which sound is output. In some embodiments, the opening comprises a resonator. The front cavity 320 is in proximity to the front area 314 of the loudspeaker 310 and includes a port 422 to the exterior of the acoustic receiver. The port to the exterior 422 is for outputting sound to a user's ear when in use. The rear cavity 330 is in proximity to the rear area 316 of the loudspeaker. In some embodiments, the loudspeaker 310 is located in the rear cavity 330 and outputs through opening 312 to the front cavity 320. In some embodiments, the front cavity 320 and the rear cavity 330 abut each other. The acoustic connection 340 is between the front cavity 320 and the rear cavity 330. That is, the acoustic connection 340 is in intermediate relation to the front cavity 320 and the rear cavity 330 and in some embodiments provides a fluid connection from one to the other.

While the acoustic system 300 is shown in Figure 3A as having a square shape, it is to be understood that other shapes, including curved shapes, are feasible and that the shape may be dictated by the space available in the device in which the acoustic receiver is installed. The acoustic system 300 may be constructed in any manner, including by modifying the acoustic system 100 shown in Figure 1A. The acoustic system 300 can be used in any device having an acoustic receiver for outputting sound, for example, to a user's ear, including but not limited to the mobile electronic device 201, a telephone, a mobile telephone, a portable audio device and headphones. It is also to be understood that the acoustic system 300 depicted in Figure 3A is a simplified implementation to illustrate the pertinent details of the design. Much more complex acoustic porting geometry is often required given device and industrial design constraints.

Figure 3B is a circuit representation of the acoustic system 300. An electric signal 305 is a source input into the loudspeaker 310. The opening 312 and the port 322 to the exterior are represented as complex impedances in series to an ear 350. The front cavity 320 and the rear cavity 330 are represented as capacitors to ground. The acoustic connection 340 is shown as a complex impedance substantially in parallel with the opening 312. The result is a "short circuiting" (modeled as providing a new current path) that would affect the efficiency of delivery of power to the port 322. To ensure reasonable efficiency, the acoustic connection 340 has high impedance compared to the opening 312 and the port to exterior 322. As will be discussed below, the high impedance maps to the geometry of the acoustic connection 340, such as physical size, shape, number of openings, position, and so forth.

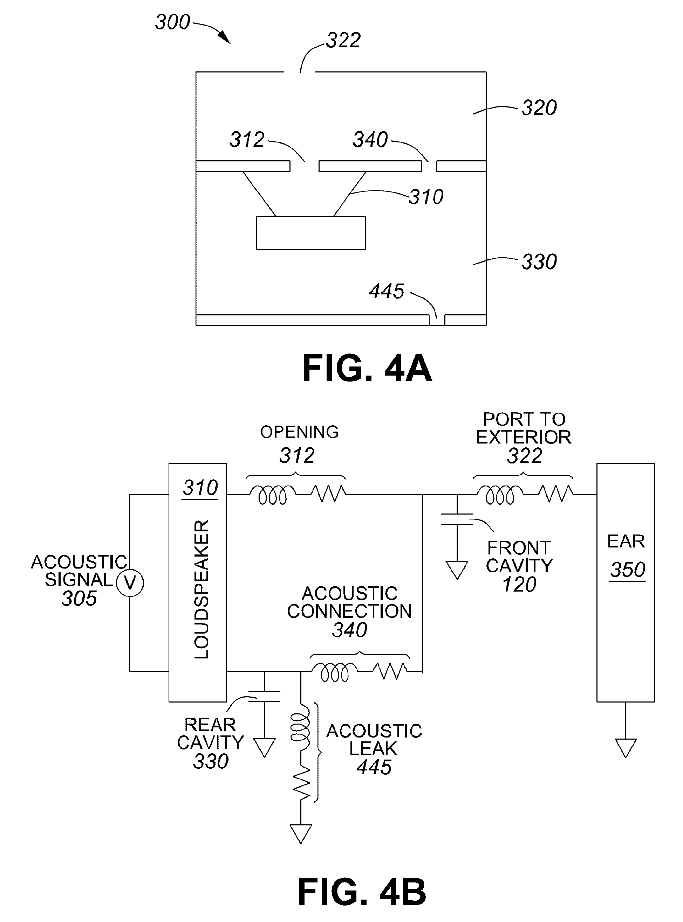

Referring now to Figure 4A, the rear cavity 330 of some embodiments of the acoustic system 310 comprises an acoustic leak 445 to the exterior of the rear cavity 330. Figure 4A is the same as Figure 3 with the exception that the acoustic leak 345 is shown.

Figure 4B is a circuit representation of the embodiment of the acoustic system 300 shown in Figure 4A. Figure 4B is the same as Figure 3B with the exception that the acoustic leak 445 is shown as a complex impedance to ground from the rear cavity. To ensure reasonable sound isolation from exterior noise and efficiency of the system, the acoustic leak 445 has high impedance compared to the opening 312 and the port to exterior 322.

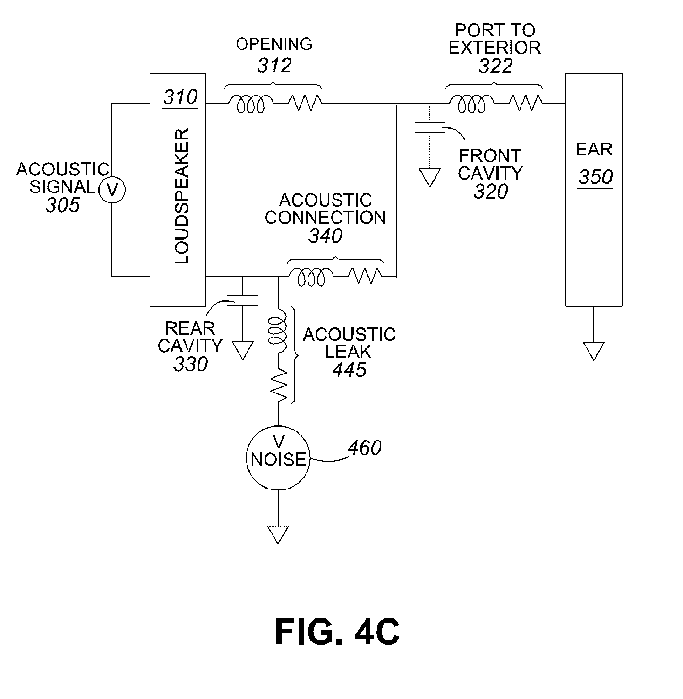

Figure 4C is a circuit representation of the embodiment of the acoustic system 300 shown in Figure 4A in which ambient noise 460 is present. The ambient noise is shown as a source between the acoustic leak and ground.

In some embodiments of the acoustic system 300, the acoustic connection 340 is a hole in a barrier separating the front cavity 320 from the rear cavity 330. The hole can be any shape and in some non-limiting embodiments the hole is round. In some embodiments, the acoustic connection is an opening approximately 1.75 mm wide by 1.0 mm deep. It is to be understood that the acoustic connection 340 is not limited to one hole or opening. The acoustic connection may comprise any number of holes or openings. In some embodiments, the acoustic connection 340 includes a tube connecting the front cavity 320 to the rear cavity 330. In exemplary embodiments, the acoustic connection 340 is sized to provide substantially consistent low frequency response at the port to the exterior 322 in both a sealed and unsealed ear positions. In some embodiments, at least a portion of the acoustic connection 240 is covered by an acoustical resistive material, such as but not limited to cloth material. The use of acoustical resistive material makes the use of a larger hole for the acoustic connection 340 possible by increasing the acoustic resistance of the acoustic connection. The acoustic resistive material can be placed on one or both ends of the acoustic connection, in example embodiments.

In some embodiments, the acoustic connection 340 has relatively high acoustic impedance in comparison to an acoustic impedance of the port to the exterior 322. As noted previously, the desired geometry of a structural element and its associated acoustic impedance is often a function of device and industrial design constraints.

In some embodiments of the acoustic system 300 described with reference to Figures 4A to 4C, the acoustic leak 445 to the exterior of the rear cavity is provided at a seam in a casing of the acoustic receiver. If the seam is not sealed, the leak can extend to the exterior of the casing through the seam. In an exemplary embodiment, the acoustic leak 445 is sized to provide substantially consistent low frequency response at the port to the exterior 322 when the receiver is in both a sealed and unsealed position with respect to a user's ear. In some embodiments, the acoustic leak 445 has relatively high acoustic impedance in comparison to acoustic impedance of the port to the exterior 322. It is to be understood that the acoustic leak 445 is not limited to one hole or opening. The acoustic leak may comprise any number of holes or openings.

In an exemplary embodiment of the acoustic system 300, the acoustic connection 340 is approximately 0.25 the size of the acoustic connection 345. This ratio was determined as an appropriate ratio through experimentation of various sizes and configurations and measuring the acoustic response and ambient noise reduction response.

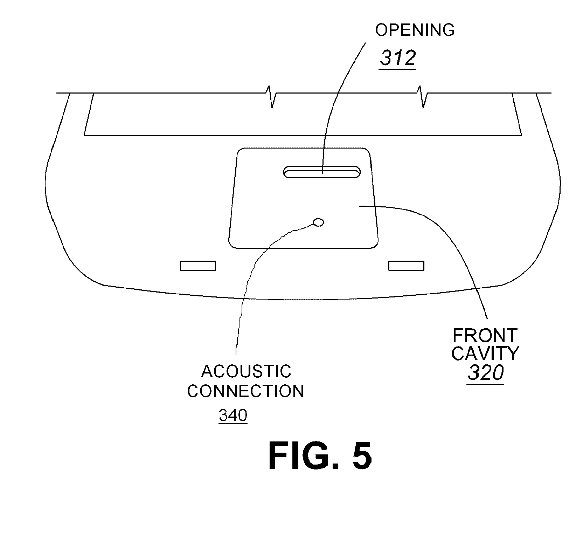

Figure 5 is a perspective view of a portion of the interior of a casing for a mobile phone in which an embodiment of the acoustic system 300 has been implemented. In Figure 5, a portion of the front cavity 320 near the front area 314 of the loudspeaker 310 is shown. The opening 312 is an elongated opening and the acoustic connection 340 is a small round hole extending to the rear cavity.

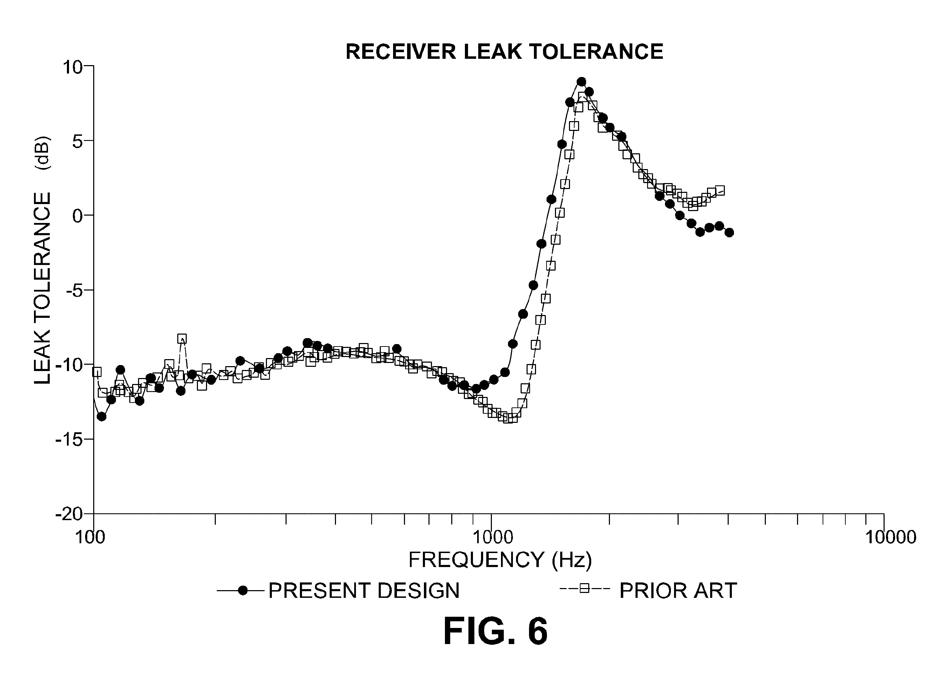

Figure 6 is a graph comparing the leak tolerance of the acoustic system 100 depicted in Figure 1A to an embodiment of the acoustic system 300. This graph illustrates the sound pressure difference at the ear when the system is applied to an artificial ear in low-leak versus high leak configuration (ITU p.57 type 3.2). The design goal is to reduce the difference, so 0 dB is ideal. Illustrated are actual 1/12th octave measurements on a device such as that illustrated in Figures 1A to 1C as well as an embodiment with an acoustic connection to the rear cavity, such as that illustrated with reference to Figures 4A to 4C. As one skilled in the art will expect, the simulations illustrated in Figures 1B and 4B, with appropriate detail, give substantially the same results.

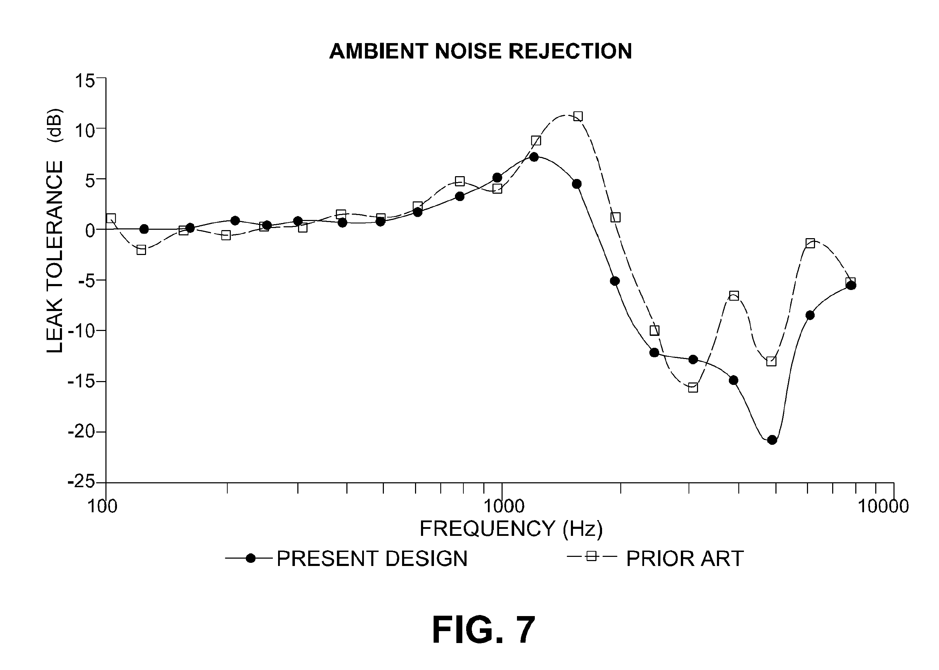

Figure 7 is a graph comparing ambient noise attenuation of the acoustic system 100 depicted in Figure 1A to an embodiment of the acoustic system 300. This graph depicts the actual measurements of devices mounted on a HATS (Head and Torso Simulator) fitted with type 3.3 artificial ears. As is shown, the device such as that illustrated in Figures 1A to 1C has substantial mechanical noise amplification in the 1600 Hz 1/3 octave band. The example embodiment of the present disclosure has noticeable improvements. The device tested did not completely seal the artificial ear and therefore some leaks remained which provided some mechanical amplification, as shown on the graph. These results may be characterized as typical, although altering the size or shape or both of the mobile electronic device to allow for a better seal may show even better noise attenuation. Not only did experimentation demonstrate objective changes in quality, subjective changes were indicated as well. The subjective response from users of the device tested was that of substantial improvement and "naturalness".

In another aspect, a method of modifying an acoustic system for use in an acoustic receiver having a loudspeaker, a front cavity and a rear cavity is provided. The method includes creating an acoustic connection between the front cavity and the rear cavity. In some embodiments, the method further comprises creating an acoustic leak from an interior of the rear cavity to an exterior of the rear cavity. In some embodiments, creating the acoustic connection comprises creating at least one hole in a barrier separating the front cavity from the rear cavity. In some embodiments, creating the acoustic leak comprises creating one or more holes in the rear cavity, the one or more holes extending from the interior of the rear cavity to the exterior of the rear cavity.

It is to be understood that the actions of the methods are not limited to the order in which they are described are can be performed in any feasible order.

The various embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and subcombinations would be readily apparent to persons skilled in the art upon review of the present application as a whole. The subject matter described herein and in the recited claims intends to cover and embrace all suitable changes in technology.

## Claims

1. An acoustic system (300) for an acoustic receiver, the system comprising:
a loudspeaker (310), with a front area and a rear area opposite the front area the front area having an opening (312) through which sound is output;
a front cavity (320) in proximity to the front area of the loudspeaker (310), the opening (312) outputting into the front cavity (320), and the front cavity (320) having a port (322) to the exterior of the acoustic system (300);
a rear cavity (330) in proximity to the rear area of the loudspeaker; and
an acoustic connection (340) between the front cavity and the rear cavity.

2. The acoustic system of claim 1, wherein the rear cavity (330) comprises an acoustic leak (445) to the exterior of the rear cavity.

3. The acoustic system of claim 1 or 2, wherein the acoustic connection is one or more holes in a barrier separating the front cavity from the rear cavity.

4. The acoustic system of any one of claims 1 to 3, wherein the acoustic connection is an opening that is approximately 1.75 mm wide by 1.0 mm long.

5. The acoustic system of any one of claims 1 to 4, wherein the acoustic leak to the exterior of the rear cavity is provided at a seam in a casing of the acoustic receiver.

6. The acoustic system of any one of claims 1 to 5, wherein the acoustic connection is sized to provide substantially consistent low frequency response at the port to the exterior in both a sealed and unsealed ear position.

7. The acoustic system of any one of claims 2 to 6, wherein the acoustic leak to the exterior of the rear cavity is sized to provide substantially consistent low frequency response at the port to the exterior in both a sealed and unsealed ear position.

8. The acoustic system of any one of claims 1 to 7, wherein the acoustic connection has relatively high acoustic impedance in comparison to an acoustic impedance of the port to the exterior.

9. The acoustic system of any one of claims 2 to 8, wherein the acoustic leak to the exterior of the rear cavity has relatively high acoustic impedance in comparison to acoustic impedance of the port to the exterior.

10. The acoustic system of any one of claims 2 to 9, wherein the acoustic connection is smaller than the acoustic leak.

11. The acoustic system of any one of claims 2 to 10, wherein the acoustic connection is approximately 0.25 the size of the acoustic connection.

12. A mobile communications device comprising the acoustic system of any one of claims 1 to 11.

13. A method of modifying an acoustic system for use in a acoustic receiver having a loudspeaker, a front cavity and a rear cavity, the method comprising:
creating an acoustic connection between the front cavity and the rear cavity.

14. The method of claim 13, further comprising creating an acoustic leak from an interior of the rear cavity to an exterior of the rear cavity.

15. The method of claim 14 or 15, wherein creating the acoustic connection comprises creating one or more holes in a barrier separating the front cavity from the rear cavity.
